# EUROPEAN PATENT APPLICATION

(11) **EP 4 635 848 A1**
(43) Date of publication of application: **22.10.2025**
(21) Application number: 24170520.1
(22) Date of filing: 16.04.2024
(51) Int. Cl.: B64D 11/02, B64D 11/04

(54) **WATER SUPPLY AND DISTRIBUTION SYSTEM WITH OPTIMIZED UTILIZATION OF ONBOARD WATER**

(71) Applicant: AIRBUS Operations GmbH, 21129 Hamburg (DE)
(72) Inventor: Hegenbart, Matthias, 21129 Hamburg (DE); Albers, Frederik, 21129 Hamburg (DE)

(57) **Abstract**

The present disclosure relates to a water supply system (100) comprising a main tank (110), a water network (150, 152) and a plurality of buffer tanks 115, each being associated with a respective water consumer unit 11, 12. A controller 180 is configured to operate in a first mode, where water from the main tank is filled into the buffer tanks, and a second mode, where water from one more first buffer tanks is conducted to the main tank and/or to one more second buffer tanks being different from the one or more first buffer tanks.

## Description

The present disclosure generally relates to a water supply system in an aircraft, and an aircraft including such water supply system. Particularly, the present disclosure relates to a water supply system allowing redistribution of water between water consumer units to optimise utilisation of onboard water, and an aircraft having such water supply system.

A conventional water supply system in an aircraft stores potable water in a main tank and provides it to water consumers, such as a faucet, a toilet or a galley insert (cof-feemaker, hot water dispenser, food preparation and device, etc.), via a water network. A newly developed pressurised water network operates at a higher pressure than usually required for all water consumers, which allows reducing the size of the water pipes in the water network, and hence the weight of the overall water network.

In order to avoid having the full pressure of the pressurised water network acting on the individual water consumers, a pressure reduction is required. This is facilitated in some instances via a buffer tank, which is filled with water from the main tank via the pressurised water network. The water consumers are provided with the water only from the buffer tank, which allows adapting a water pressure based on the characteristics of the water consumer, including employing a dedicated conveying device or even providing the water from the buffer tank solely via gravity (e.g., for a water dispenser).

However, each water consumer unit has its own buffer tank, and each buffer tank is usually filled with a predefined amount of water. Thus, the predefined amount of water of all buffer tanks provides an additional weight for the aircraft, which increases fuel consumption of the aircraft.

It is therefore an object of the present disclosure to provide an improved water supply system, particularly saving energy and overall weight.

This object is solved by the present invention as defined in the independent claims. Preferred embodiments are defined by the dependent claims.

According to a first aspect to better understand the present disclosure, a water supply system in an aircraft comprises a main tank configured to store a main supply of water, a plurality of water consumer units, each comprising at least one water consumer and a buffer tank configured to store a water supply for the at least one water consumer, and a water network configured to conduct water from the main tank to each of the plurality of water consumer units.

Furthermore, the disclosed water supply system comprises a controller configured to operate the water network in a first mode, where water from the main tank is conducted to one or more of the buffer tanks in the plurality of water consumer units to fill the one or more buffer tanks, and to operate the water network in a second mode, where water is removed from one or more first water buffer tanks and conducted to the main tank and/or to one or more second buffer tanks being different from the one or more first buffer tanks.

Thus, the present water supply system allows redistribution of water already in the buffer tanks. While in the first mode, the water is supplied to one or more buffer tanks (partially similar to a conventional system), operating in the second mode allows reusing the water. In other words, by removing the water from the buffer tanks and conducting it into the main tank (or directly to other buffer tanks), the water can (later) be used by other water consumer units. This allows reduction of the overall amount of water to be carried by the aircraft, including reducing the amount of water filled into the main tank during turnover of the aircraft.

Moreover, the water supply system is to be drained in certain situations, such as parking over night or other non-use of the aircraft in cold conditions, to avoid freezing of the water and damaging the water supply system. Currently, such draining is achieved by conducting the water from the buffer tank via the water consumers into a waste system of the aircraft.

When operating in the second mode, all buffer tanks can be emptied and even the water network can be emptied, while the entire water is collected in the main tank. The main tank may not be at risk of freezing, or can more easily be drained, if required.

In an implementation variant, the water network can comprise a plurality of water pipes configured to conduct water, a first conveying device configured to convey water in the plurality of water pipes, and a plurality of inlet valves, wherein one inlet valve is arranged at each buffer tank and is configured to fluidly connect or disconnect the corresponding buffer tank with one of the plurality of water pipes. In other words, each inlet valve allows a fluid connection of one buffer tank with the water network. Thus, each buffer tank can individually be coupled and decoupled to/from the water network.

In an implementation variant, the controller, in the second mode, can be further configured to operate the first conveying device to conduct water from the plurality of water pipes towards the main tank, open one or more first inlet valves associated with the one or more first water buffer tanks until a predetermined amount of water is removed from the one or more first water buffer tanks, and close the one or more first inlet valves. Thus, a predetermined amount of water can be removed from one or more water buffer tanks, i.e. can be drained from these water buffer tanks and can be stored in the main tank.

In an implementation variant, the controller, in the second mode, can be further configured to operate the first conveying device to conduct water from the main tank into the plurality of water pipes, and open one or more second inlet valves associated with the one or more second water buffer tanks. Thus, at any time water is required at water consumers associated with the second water buffer tanks, the water that was removed from the first water buffer tanks can be redistributed. Therefore, less water has to be carried by the aircraft, since water used to fill a first water buffer tank can be redistributed, particularly, in a case where the water consumers at the first water buffer tank do not require the buffered water anymore (all of the buffered water or an amount of water required at the water consumer of another buffer tank).

In an implementation variant, the first conveying device can be a reverse pump, i.e. a pump capable of pumping in a forward and backward direction. As a mere example, a positive displacement pump, such as a gear pump or centrifugal pump, can be employed as the first conveying device. Alternatively, the first conveying device can be a unidirectional pump, where the suction and pressure sides thereof can be changed, e.g., swapped, for example, using a valve cascade. Further alternatively, the first conveying device can comprise a plurality of conveying devices, at least one for operating in the first mode, while the remaining conveying devices can operate in the second mode.

In an implementation variant, the water supply system can further comprise a plurality of consumer conveying devices, wherein one consumer conveying device is arranged downstream of one of the buffer tanks and is configured to convey water to the at least one water consumer of the associated water consumer unit and to convey water into the water network.

Furthermore, the controller, in the second mode, can be further configured to operate at least one of the consumer conveying devices to conduct water from the associated buffer tank towards the main tank, i.e., back into the water network. Thus, while the consumer conveying device may regularly be used to provide water from the buffer tank to the actual water consumers, the consumer conveying device may further be utilised to remove water from the associated buffer tank.

This may facilitate removing and/or redistributing water already stored in a buffer tank. As a mere example, such consumer conveying device configured to conduct water towards the main tank may be employed at water buffer tanks associated with a water consumer unit that is further away from the main tank and/or from the first conveying device. In such case, the consumer conveying device can be configured to support moving the water from the associated buffer tank towards the first conveying device, for example, in case of a long water pipe.

In an implementation variant, the water network can further comprise a second conveying device configured to convey water in a second group of pipes of the plurality of water pipes, wherein the first conveying device is configured to convey water in a first group of pipes of the plurality of water pipes being different from the second group. In other words, the water network is divided into two groups of water pipes, such as branches of the water network. The first and second conveying devices are respectively configured to convey water into the first and second group of pipes, i.e. into one of the two branches of the water network, and are further configured to conduct water in the opposite direction, i.e., remove the water from the water network and buffer tanks associated with the respective branch of the water network.

Furthermore, the plurality of water pipes can include a connecting water pipe fluidly connecting the first and second conveying devices. In other words, a shortcut between the first and second conveying devices is provided or a bypass of the water network or the main tank.

In such a variant, the controller, in the second mode, can be further configured to operate the first conveying device to conduct water from the first group of water pipes towards the connecting water pipe, and operate the second conveying device to conduct water from the connecting water pipe into the second group of water pipes. Thus, redistributing of water between water buffer tanks does not require temporarily storing the water in the main tank, but operating both conveying devices simultaneously through the "shortcut" connecting water pipe. This renders the redistribution of water faster.

As a mere example, the connecting water pipe can be a (first) branching portion of the water network. For instance, if a first water pipe is fluidly connected to the main tank, such first water pipe may divide into a pair of second water pipes, each being fluidly connected to the first or second conveying device. The pair of second water pipes forms the connecting water pipe, as they fluidly connect both conveying devices and "bypass" the first water pipe.

In an implementation variant, the controller, in the first mode, can be further configured to operate the first and/or second conveying device to conduct water from the main tank into the plurality of water pipes towards the buffer tanks of the plurality of water consumer units, and open at least one of the plurality of inlet valves, in order to fill the associated buffer tank with water from the main tank. Thus, the first and/or second conveying device can be used to regularly fill the water buffer tank, for example, to a minimum water level in the water buffer tank or to a maximum water level in the water buffer tank. It is to be understood that the water supply system may be operated without a minimum water level for the water buffer tanks, but that filling of water buffer tank always means to fill the water buffer tank up to its maximum water level.

In an implementation variant, the controller can be further configured to determine a current use phase of the aircraft, such as a flight phase of the aircraft or turnaround, and/or determine a flight route of the aircraft, and/or track a usage of water at each water consumer unit during a flight, and/or determine a water level of each of the buffer tanks, and/or determine a type of each of the plurality of water consumer units.

Furthermore, the controller can be configured to determine to operate in the second mode based on one or more of the current use/flight phase, the flight route, the water usage of at least one of the water consumer units, the water level of one or more of the buffer tanks, and/or the types of the water consumer units.

Each of these parameters can form a basis to determine a water consumption of each water consumer unit. For instance, a flight phase, such as beginning, mid-term or end of the flight, allows conclusions on a current water consumption of a particular water consumer unit. As a mere example, a monument including a galley will have a higher water consumption at the beginning of the flight, while at the end of the flight regularly no service will be provided to the passengers and, hence, less or no water is required at the galleys. Likewise, lavatories will be used more often in the beginning of the flight, such as already during boarding and particularly after a meal service. However, during sleeping phases (also depending on the time of day) of a longer flight, less water will be used in lavatories. Such parameters may include a user input or setting in an overall aircraft control. As a mere example, a flight attendant may press a button or perform another user input (setting) that a galley may not be used, that meal and drink services are terminated, or the like. Likewise, other settings may be taken into consideration, such as particular lighting settings of the cabin, for example, when the cabin light is dimmed for sleeping phases or the like.

In addition, a flight route may allow conclusions on a water consumption. For instance, a flight starting in a region known for vacations may have higher water consumptions at the beginning of and/or throughout the flight compared to flights starting and ending in larger cities of the same country. Furthermore, the flight route also allows determining a duration of the flight. For instance, on short distance flights regularly less water is required, as lavatories will not be used as often per passenger and some flight routes may not even include any meal service, so that only a small amount of water may be required in the beginning (for flight attendants being prepared for any irregularities during boarding), but no water will be required thereafter.

In an implementation variant, the controller can further be configured to predict a future water usage of at least one of the water consumer units, wherein determining to operate in the second mode comprises determining to operate in the second mode based on the predicted future water usage.

The future water usage, for example, can be predicted based on the same parameters, including a current use/flight phase, a flight route, a usage of water at each water consumer unit during a flight, a water level of each of the buffer tanks, and/or a type of each of the plurality of water consumer units. As a mere example, if the water consumption of galleys decreases, it may be predicted that a meal and drink service has ended or will end in a determinable time span. Thus, it can be further predicted that the water consumption at lavatories will increase, as passengers are able to stand up again.

In an implementation variant, the controller may further be configured to store information on a water consumption of each water consumer unit in association with one or more of the parameters, such as the current use/flight phase, the flight route, and the type of each of the plurality of water consumer units.

The type of water consumer units may not only distinguish between galleys and lavatories, but may also distinguish between lavatories in a particular passenger class of the aircraft (such as first class, business class and economy class). Likewise, galleys may be distinguished based on their location with respect to a passenger class. As a mere example, a water consumption per passenger per hour is smaller in a lavatory of a first class or business class compared to an economy class lavatory, where a larger amount of passengers shares a smaller amount of lavatories. The overall water consumption in a galley associated with first class or business class may be smaller due to the smaller number of passengers per galley, but may be required over a longer time period, since the service will last longer compared to a galley in economy class.

The controller may then be further configured to determine to operate in the second mode based on the stored information. For instance, the more information on the water consumption is stored, the better can be a prediction of the water consumption at specific water consumer units. As a mere example, if an aircraft flies on specific routes, the future prediction of the water consumption of each water consumer unit in this aircraft can be better determined based on the route. Likewise, based on the flight duration of the next flight, the water consumption can be better predicted, the more information has been stored by the controller.

Thus, the controller of the water supply system is able to learn over time and perform better future predictions of water consumption. As a mere example, the controller may include a neural network or similar computer learning algorithm, in order to improve future prediction of water consumptions of each individual water consumer unit.

The controller (e.g., a neural network therein) can be trained on data of the aircraft (local data) over time. It is to be understood that such training can include data from other aircrafts (global data), in order to improve the decision taking when to operate in the second mode. In case of global data, the controller may be updated via a mobile data network and/or during maintenance phases.

In an implementation variant, the controller can be configured to determine the current use phase of the aircraft as a time, where at least a portion of the water network is exposed to freezing conditions, and to determine to operate alternately in the first mode and the second mode. Such use phase can be a flight phase, such as a long haul flight at high-altitude, and optionally at a time where the water consumption of one or more water consumer units is small or zero, so that the portion of the water network may be at risk of freezing. The use phase may also correspond to a turnaround time and/or overnight stay at an airport or the like, where cold weather conditions are present, and the water supply system may not operate. The controller may likewise determine that an aircraft door (e.g., a cargo door) is open, so that the interior space of the aircraft may be exposed to the cold weather condition.

In any case, alternately conducting water from the main tank to one or more of the buffer tanks and removing water from the buffer tanks towards the main tank avoids that water maintains at the same location in the water network. Thus, cold water (or water that is in a portion of the water network where it may become colder until it freezes) may be exchanged with warmer water. Such portion of the water network can be any pipe, duct, hose, pump, buffer tank or the like.

Furthermore, the controller may also be configured to determine whether particular conditions are present in the aircraft. As a mere example, if frozen goods are present in the cargo area, portions of the water networks running close to such goods are at higher risk of freezing, compared to when heated cargo is transported such risk is reduced. Likewise, the controller may also take into consideration during this determination the location of the water consumer unit, such as being closer to the outer skin of the aircraft or closer to a centre of the aircraft, where it is regularly warmer than at the outer skin.

In an implementation variant, the controller may be further configured to determine that particular water consumer units or water consumers may not be provided with water (anymore). For example, humidifiers or other non-mandatory water consumers may be switched off, so that the water can be removed from their corresponding buffer tanks in the second mode.

Likewise, the buffer tanks of particular water consumer units or water consumers can be provided with less water during the first mode, for example, if the overall water capacity is low. Thus, a full refilling of the buffer tanks is prevented and the remaining water amount in the main tank may be preserved for other purposes.

In an implementation variant, the water supply system may include a greywater reuse system, where greywater is buffered in an associated greywater buffer tank of a water consumer unit. Greywater can be used water that may not be contaminated, such as water from a water dispenser in a galley, water from a faucet at a sink of a lavatory or the like. Greywater may include soap or similar substances, which may not harm human beings. Such greywater may further be used, for example, to flush a toilet or the like, and reduces the overall amount of fresh potable water required for a flight.

The redistribution of water according to any of the implementation variants of the first aspect may likewise be applied to such greywater. In other words, greywater may be distributed between greywater buffer tanks of a plurality of water consumer units. This allows conducting greywater from a buffer tank that is full to a buffer tank that is empty (or not full), instead of disposal of the greywater of the full buffer tank into a waste water system.

According to a second aspect to better understand the present disclosure, an aircraft comprises a water supply system of the first aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates an exemplary water supply system;
- Figure 2: schematically illustrates another exemplary water supply system; and
- Figure 3: schematically illustrates an aircraft comprising a water supply system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

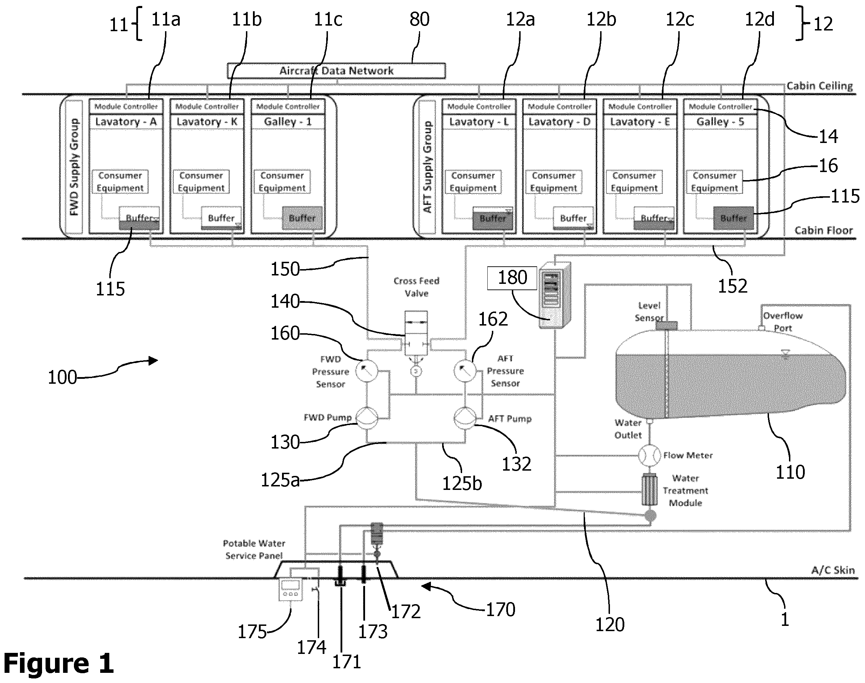

Figure 1 schematically illustrates an exemplary water supply system 100, which comprises a main water tank 110 and a plurality of water consumer units 11, 12. The water is distributed from the main water tank 110 to the water consumer units 11, 12 via a plurality of water pipes. Specifically, a first water pipe 120 fluidly connects the main water tank 110 to one or more conveying devices 130, 132, which convey water into a plurality of water pipes 150, 152 fluidly connecting the conveying devices 130, 132 with each of the water consumer unit 11, 12.

As a mere example (as illustrated in Figure 1), a first group 11 of water consumer units 11a, 11b, 11c may be arranged at the end of one branch 150 of the water network, while a second group 12 of water consumer units 12a, 12b, 12c, 12d may be arranged at the end of another branch 152 of the water network. The first conveying device 130 is configured to convey water through the plurality of water pipes 150 to the first group 11, and the second conveying device 132 is configured to convey water through the plurality of water pipes 152 to the second group 12.

It is to be understood that a single conveying device can be used to convey water to all water pipes 150, 152 of the water network. In case two conveying devices 130, 132 are employed, the first water pipe 120 may branch into a pair of connecting pipes 125a, 125b.

Figure 1 further illustrates pressure sensors 160, 162 in each of the branches 150, 152 of the water network, which allow the controller 180 to check a desired water pressure in each of the water network branches 150, 152. Furthermore, a cross feed valve 140 may be employed to allow a fluid connection between both water network branches 150, 152 downstream of the first and second conveying devices 130, 132. This provides for a redundancy in the system 100.

Turning back to the water consumer units 11, 12, each of the water consumer units 11, 12 includes a buffer tank 115 configured to store a water supply for the at least one water consumer (equipment) 16 of the associated water consumer unit 11, 12. Such buffer tank 115 also allows a pressure separation between the high-pressure water network 150, 152 and the low-pressure consumer equipment 16.

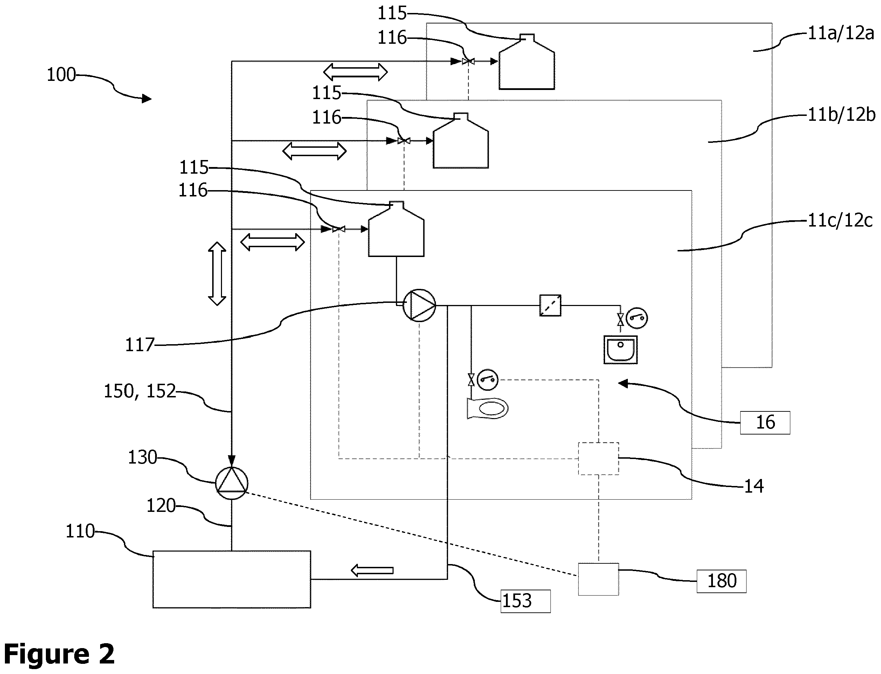

Furthermore, each of the water consumer units 11, 12 can be equipped with a module controller 14, that operates the consumer equipment 16, such as a toilet flushing device, a faucet, a water dispenser, a galley insert, etc.. The module controller 14 can be configured to open and close valves (Figure 2) at the consumer equipment 16. In addition, the module controller 14 can transmit corresponding data (indicating the operation of the respective consumer equipment 16) via an aircraft data network 80 to the controller 180 of the water supply system 100. This allows the controller 180 to determine the water consumption of the individual water consumer unit 11, 12. In addition, it allows the controller 180 to store information on a water consumption of each water consumer unit 11, 12 in association with one or more parameter, such as a current use phase, including a current flight phase, a flight route, and a type of each of the plurality of water consumer units 11, 12.

Turning to Figure 2, which schematically illustrates another exemplary water supply system 100. Components of the exemplary water supply system 100 of Figure 1 that are also present in the water supply system 100 of Figure 2 are indicated by the same reference numerals. Thus, for sake of brevity, their description is omitted. Thus, the water supply systems 100 of Figures 1 and 2 can be the same or can have slightly different settings. The water consumer units 11, 12 of Figure 2, for example, illustrate water consumers (consumer equipment) 16 in form of a toilet and a sink and faucet. However, the water consumer units 11, 12 are not restricted to this specific lavatory setting, but can likewise be a galley or other water consumer unit 11, 12.

As can be derived from Figure 2, each water consumer unit 11, 12 comprises an inlet valve 116, which is arranged at a respective/corresponding buffer tank 115. Each water buffer tank 115 can be filled with water from the main tank 110. This can be achieved by the controller 180 operating in a first mode, where water from the main tank 110 is conducted to one more of the buffer tanks 115. As a mere example, the corresponding conveying device 130, 132 can be operated to increase the pressure in the water network 150, 152. Thereafter or simultaneously, one or more of the plurality of inlet valves 116 is opened by the controller 180, in order to fill the associated buffer tank/s 115 with water from the main tank 110. This filling of the buffer tanks 115 can be performed one buffer tank 115 after the other, or a certain number of buffer tanks 115 at the same time, depending on the amount of water that can be conveyed by the conveying device/s 130, 132 and the corresponding water network branch 150, 152.

Furthermore, the controller may determine, based on a certain parameter, to operate in a second mode, where water is removed from one or more first water buffer tanks 115 and conducted to the main tank 110 and/or conducted to one or more second buffer tanks 115 being different from the one more first buffer tanks 115.

As a mere example, the controller 180, in the second mode, can be further configured to operate the first conveying device 130, 132 to conduct water from the plurality of water pipes 150, 152 towards the main tank (e.g., also via first water pipe 120), and to open one more first inlet valves 116 associated with the one or more first water buffer tanks 115 that are to be drained or from which water shall be removed. The opening of the one more first inlet valves 116 can be performed until a predetermined amount of water is removed from the one or more first water buffer tanks 115. The one or more first inlet valves 116 can then be closed by the controller 180.

Thereafter, the controller 180 can be further configured to operate the first conveying device 130, 132 to conduct water from the main tank 110 into the plurality of water pipes 150, 152, and to open one more second inlet valves 116 associated with the one more second water buffer tanks 115. Thus, water can be redistributed or reused between buffer tanks 115 of different water consumer units 11, 12. This is illustrated by double arrows at the water network pipes 150, 152, which indicate that water can run in both directions depending on the operational state of the conveying device 130, 132.

Instead of or in addition to operating the conveying device 130, 132 in the second mode, the controller 180 can further be configured to control a consumer conveying device 117 arranged downstream of one of the buffer tanks 115 that is actually configured to convey water from the buffer tank 115 to the at least one water consumer 16. In the second mode, the controller can be configured to operate the consumer conveying device 117 in order to convey water into the water network 120, 150, 152. It is to be noted that Figure 2 illustrates a water pipe 153 connecting the consumer conveying device 117 directly with the main tank 110. However, a fluid connection between the consumer conveying device 117 and another portion of the water supply system 100, particularly of the water network 120, 125, 150, 152, can be achieved by the water pipe 153, so that water from the buffer tank 115 can be redistributed or reused.

As a mere example, the water pipe 153 and consumer conveying device 117 can be configured to convey water into the corresponding water network branch 150, 152 between the cross feed valve 140 (Figure 1) and the respective buffer tank 115. This allows the controller 180 to only operate the consumer conveying device 117 and to open one or more of the inlet valves 116 of buffer tanks 115 that are to be filled by the water of the buffer tank 115 associated with the operating consumer conveying device 117.

In case the cross feed valve 140 is present and the to-be-filled water buffer tank 115 is in a different water network branch 150, 152, the controller 180 may further be configured to open the cross feed valve 140. Thus, water can be redistributed between water buffer tanks 115 even without operating the first and/or second conveying devices 130, 132.

Again with respect to Figure 1, in the second mode, the controller 180 can be further configured to operate the first conveying device 130 to conduct water from the first group of water pipes 150 towards the connecting water pipe 125a (as described with respect to Figure 2) and to further operate the second conveying device 132 to conduct water from the connecting water pipe 125b into the second group of water pipes 152. By operating corresponding inlet valves 116, water from the first group of buffer tanks 115 can be removed and directly provided to the second group of buffer tanks 115 via the connecting water pipe 125 (= 125a + 125b). Thus, a temporary storage in the main tank 110 can be omitted and the water can be redistributed or reused faster.

With respect to any of the exemplary water supply systems 100, the controller 180 can determine a certain parameter as indicated above. Such parameter can include a current flight face of the aircraft 1, and/or a flight route of the aircraft 1, and/or usage of water tracked at each water consumer unit 11, 12 during a flight, and/or a water level of each of the buffer tanks 115, and/or a type of each of the plurality of water consumer units 11, 12. Furthermore, the controller 180 can be configured to store such parameters over time, particularly during each flight of the aircraft 1.

This allows the controller to determine to operate in the second mode based on one more of these stored/determined parameters. In addition, a future water usage of at least one of the water consumer units 11, 12 can be predicted by the controller. Such predicted future water usage can then be used by the controller to determine to operate in the second mode. Thus, the controller 180 can implement a learning algorithm that improves over time the future water usage prediction of each water consumer unit 11, 12.

This allows to better predict the actual water consumption during a particular flight (route). The controller 180 can then facilitate determining the amount of water to be filled into the main tank 110 before the flight.

Figure 1 further illustrates in a lower region of the aircraft 1, such as a cargo or storage area underneath a cabin floor, the main tank 110 configured to store a main supply of potable water. It is to be understood that more than one main tank 110 can be employed, but the drawings illustrate only one tank 110. The main tank 110 may be filled with potable water via a potable water service panel 170 arranged at or in the aircraft skin. This conventional service panel 170 is only briefly described. For instance, water can be filled into tank 110 via a fill/drain interface or nipple 171. The corresponding pipe or duct may be equipped with a fill/drain valve 172, in order to separate or connect the system 100 from the interfaces of the service panel 170. An overflow 173 allows filling the tank 110 with a maximum level of water. The service panel 170 may further be equipped with a door lock and/or handle 174 allowing opening and closing a service panel door (not illustrated), and a data interface 175 providing a connection port for a data exchange with the system 100.

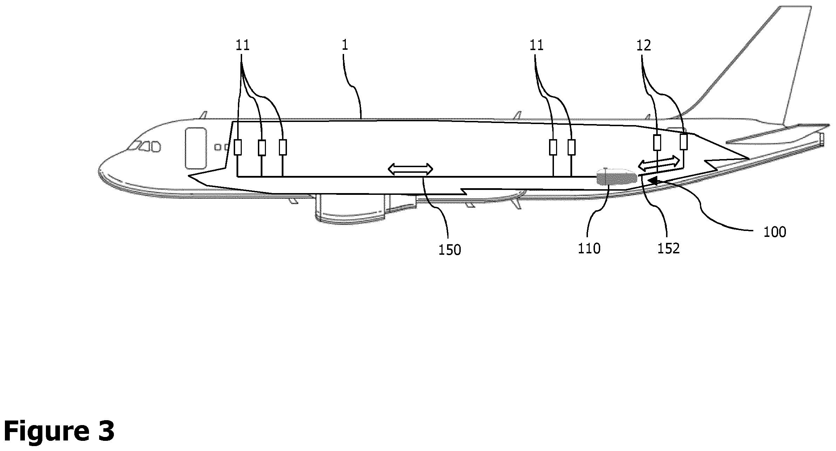

Figure 3 schematically illustrates an aircraft 1 comprising at least one water supply system 100. Figure 3 schematically illustrates an exemplary arrangement of the first group of water consumer units 11 and the second group of water consumer units 12 forward and rearward of the main tank 110, respectively. This, however, is only one example and the water consumer units 11, 12 may be arranged and grouped in any desired manner. As a mere example, all water consumer units on the left-hand side of the aircraft 1 may be grouped together, while all water consumer units on the right-hand side of the aircraft 1 are also grouped together.

As can be derived from Figure 3, if buffered water in a galley 11 in the front of the aircraft 1 is not used anymore, e.g., if food and beverage service has ended, the water can be removed from the corresponding buffer tank 115 back to the main tank 110 or directly into the buffer tank 115 of another water consumer unit 11, 12.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A water supply system (100) in an aircraft (1), the system comprising:
a main tank (110) configured to store a main supply of water;
a plurality of water consumer units (11, 12), each comprising at least one water consumer (16) and a buffer tank (115) configured to store a water supply for the at least one water consumer (16); and
a water network (117-170) configured to conduct water from the main tank (110) to each of the plurality of water consumer units (11, 12),
**characterized in that** the water supply system (100) further comprises a controller (180) configured to:
operate the water network (117-170) in a first mode, where water from the main tank (110) is conducted to one or more of the buffer tanks (115) in the plurality of water consumer units (11, 12) to fill the one or more buffer tanks (115), and
operate the water network (117-170) in a second mode, where water is removed from one or more first buffer tanks (115) and conducted to the main tank (110) and/or to one or more second buffer tanks being different from the one or more first buffer tanks.

2. The water supply system (100) of claim 1, wherein the water network comprises:
a plurality of water pipes (120, 125, 150, 152) configured to conduct water;
a first conveying device (130, 132) configured to convey water in the plurality of water pipes; and
a plurality of inlet valves (116), wherein one inlet valve (116) is arranged at each buffer tank (115) and is configured to fluidly connect or disconnect the corresponding buffer tank (115) with one of the plurality of water pipes (150, 152).

3. The water supply system (100) of claim 2, wherein the controller (180), in the second mode, is further configured to:
operate the first conveying device (130, 132) to conduct water from the plurality of water pipes (120, 150, 152) towards the main tank (110),
open one or more first inlet valves (116) associated with the one or more first water buffer tanks (115) until a predetermined amount of water is removed from the one or more first water buffer tanks,
close the one or more first inlet valves (116),
operate the first conveying device (130, 132) to conduct water from the main tank (110) into the plurality of water pipes, and
open one or more second inlet valves (116) associated with the one or more second water buffer tanks (115).

4. The water supply system (100) of claim 2 or 3, further comprising:
a plurality of consumer conveying devices (117), wherein one consumer conveying device (117) is arranged downstream of one of the buffer tanks (115) and is configured to convey water to the at least one water consumer (16) of the associated water consumer unit (11, 12) and to convey water into the water network,
wherein the controller (180), in the second mode, is further configured to:
operate at least one of the consumer conveying devices (117) to conduct water from the associated buffer tank (115) towards the main tank (110).

5. The water supply system (100) of claim 2, wherein the water network further comprises:
a second conveying device (132) configured to convey water in a second group of pipes (152) of the plurality of water pipes,
wherein the first conveying device (130) is configured to convey water in a first group of pipes (150) of the plurality of water pipes being different from the second group,
wherein the plurality of water pipes includes a connecting water pipe (125) fluidly connecting the first and second conveying devices (130, 132), and wherein the controller (180), in the second mode, is further configured to:
operate the first conveying device (130) to conduct water from the first group of water pipes (150) towards the connecting water pipe (125), and
operate the second conveying device (132) to conduct water from the connecting water pipe (125) into the second group of water pipes (152).

6. The water supply system (100) of one of claims 2 to 5, wherein the controller (180), in the first mode, is further configured to:
operate the first and/or second conveying device (130, 132) to conduct water from the main tank (110) into the plurality of water pipes (150, 152) towards the buffer tanks (115) of the plurality of water consumer units (11, 12), and
open at least one of the plurality of inlet valves (116), in order to fill the associated buffer tank (115) with water from the main tank.

7. The water supply system (100) of one of claims 1 to 6, wherein the controller (180) is further configured to:
determine a current use phase of the aircraft (1), and/or
determine a flight route of the aircraft (1), and/or
track a usage of water at each water consumer unit (11, 12) during a flight, and/or
determine a water level of each of the buffer tanks (115), and/or
determine a type of each of the plurality of water consumer units, and
determine to operate in the second mode based on one or more of the current use phase, the flight route, the water usage of at least one of the water consumer units, the water level of one or more of the buffer tanks, and/or the types of the water consumer units.

8. The water supply system (100) of claim 7, wherein the controller (180) is further configured to:
predict a future water usage of at least one of the water consumer units (11, 12),
wherein determining to operate in the second mode comprises determining to operate in the second mode based on the predicted future water usage.

9. The water supply system (100) of claim 7 or 8, wherein the controller (180) is further configured to:
store information on a water consumption of each water consumer unit (11, 12) in association with one or more of a current use phase, a flight route, and a type of each of the plurality of water consumer units.

10. The water supply system (100) of one of claims 7 to 9, wherein the controller (180) is configured to:
determine the current use phase of the aircraft (1) as a time, where at least a portion of the water network (117-170) is exposed to freezing conditions, and
determine to operate alternately in the first mode and the second mode.

11. An aircraft (1), comprising:
at least one water supply system (100) of one of claims 1 to 10.
